# EUROPEAN PATENT SPECIFICATION

(11) **EP 3 042 359 B1**
(45) Date of publication and mention of the grant of the patent: **13.01.2021**
(21) Application number: 13777149.9
(22) Date of filing: 03.09.2013
(51) Int. Cl.: G06T 7/246

(54) **LED CENTER DETECTION FOR OPTICAL HEAD TRACKING**
LED-MITTENERKENNUNG FÜR OPTISCHES HEADTRACKING
DÉTÉCTION DE CENTRE DE DEL POUR LE SUIVI OPTIQUE DE TÊTE

(43) Date of publication of application: 13.07.2016
(73) Proprietor: Aselsan Elektronik Sanayi ve Ticaret Anonim Sirketi, 06370 Ankara (TR)
(72) Inventor: OZSARAC, Ismail, 06011 Ankara (TR); SAHIN, Eda, 06011 Ankara (TR)
(74) Representative: Yamankaradeniz, Kemal
(86) International application number: PCT/IB2013/058244
(87) International publication number: WO 2015/033184

(56) References cited:
- FOXLIN E ET AL: "FlightTracker: A Novel Optical/Inertial Tracker for Cockpit Enhanced Vision", PROCEEDINGS OF THE THIRD IEEE AND ACM INTERNATIONAL SYMPOSIUM ON MIXED AND AUGMENTED REALITY, NOV. 2 - 5, ARLINGTON, VA, USA, IEEE, PISCATAWAY, NJ, USA, 2 November 2004 (2004-11-02), pages 212-221, XP010769700, DOI: 10.1109/ISMAR.2004.32 ISBN: 978-0-7695-2191-6
- MEYER ET AL: "A Survey of Position Trackers", PRESENCE, CAMBRIDGE, MA, US, vol. 1, no. 2, 21 March 1992 (1992-03-21), pages 173-200, XP002103552, ISSN: 1054-7460
- STRAUSS M ET AL: "Non-RF wireless helmet-mounted display and two-way audio connectivity using covert free-space optical communications", DISPLAY TECHNOLOGIES AND APPLICATIONS FOR DEFENSE, SECURITY, AND AVIONICS V; AND ENHANCED AND SYNTHETIC VISION 2011, SPIE, 1000 20TH ST. BELLINGHAM WA 98225-6705 USA, vol. 8042, no. 1, 13 May 2011 (2011-05-13) , pages 1-12, XP060014716, DOI: 10.1117/12.883641 [retrieved on 1901-01-01]
- PASCHALAKIS S ET AL: "Double precision floating-point arithmetic on FPGAs", FIELD-PROGRAMMABLE TECHNOLOGY (FPT), 2003. PROCEEDINGS. 2003 IEEE INTE RNATIONAL CONFERENCE ON 15-17 DEC. 2003, PISCATAWAY, NJ, USA,IEEE, 15 December 2003 (2003-12-15), pages 352-358, XP010688363, DOI: 10.1109/FPT.2003.1275775 ISBN: 978-0-7803-8320-3

## Description

### Field of the invention

The present invention relates to an image processing method on FPGA (Field Programmable Gate Array) to detect LED (Light Emitting Diode) centers/positions in the video frame for optical head tracking system.

### Background of the invention

The LED positions are used for HMD (Helmet Mounted Display) tracking system to control the fire systems. Therefore the LED position should be calculated on a dedicated hardware and the results of the tracking should be accurate. Besides, the tracking frequency should be high enough not to cause any system latency.

The Japanese patent application numbered JP2010050757 discloses a method and system for information providing, wherein an invisible marker is composed of a transparent substance having recursive reflection characteristics. A camera has an infrared LED for irradiating infrared light, a CMOS capable of imaging light within both frequency areas of an infrared area and a visible light area, and an FPGA for controlling a process for imaging an image under visible light and infrared light (hereinafter called as a visible infrared image) by a state of irradiating the infrared light under the visible light to the object using the infrared LED and a process for imaging an image under only visible light (hereinafter called as a visible image) without irradiating the infrared light to be executed. A wearable computer produces a difference image between the visible infrared image and the visible image, and detects the invisible marker to be included within the difference image.

The United States patent application numbered US2007242086 discloses an image processing system, image processing apparatus, image sensing apparatus, and control method thereof. According to the disclosure a first process to be executed by an apparatus and a second process to be executed by an apparatus to obtain a composite image by compositing a real space image with a virtual space image are determined by negotiation. The apparatus transmits data necessary for executing the second process to the apparatus. The apparatus executes the second process by using the data and transmits the process result to the apparatus. The apparatus receives the process result by the apparatus and executes the first process. The apparatus displays a composite image obtained on the basis of the result of the first process or a composite image obtained on the basis of the process result and the received process result.

Reference may be made to any of:
a document by Foxlin et al., titled "FlightTracker: a novel optical/inertial tracker for cockpit enhanced vision" from Proceedings of the Third IEEE and ACM International Symposium on Mixed and Augmented Reality, 2-5 November 2004, Arlington, VA, USA, IEEE, Piscataway, NJ, USA, pages 212-221, DOI: 10.1109/ISMAR.2004.32, ISBN: 978-0-7695-2191-6, which is related to applying miniature MEMS sensors to cockpit helmet-tracking for enhanced/synthetic vision by implementing algorithms for differential inertial tracking between helmet-mounted and aircraft-mounted inertial sensors, and optical drift correction techniques;
a document by Meyer et al., titled "A Survey Position Trackers", from Presence, Cambridge, MA, US vol. 1, no. 2, 21 March 1992, pages 173-200, ISSN: 1054-7460, which is related to position-tracking technologies and their use in virtual reality (VR) applications, in which a framework is established to evaluate the suitability of a position-tracking implementation for virtual reality use, in which mechanical, optical, magnetic, and acoustic implementations are discussed with examples of each, and in which the effect of position tracking on a virtual reality user is discussed, especially with regard to the position tracker's role as a cause of simulation sickness; and
a document by Strauss and Volfson, titled "Non-RF wireless helmet-mounted display and two-way audio connectivity using covert free-space optical communications", from Display Technologies and Applications for Defense, Security, and Avionics V; and Enhanced and Synthetic Vision 2011, SPIE, 1000 20th St. Bellingham, WA, 98225-6705, USA, vol. 8042, no. 1, 13 May 2011, pages 1-12, DOI: 10.1117/12.883641, which is related to a wireless helmet-mounted display and two-way audio connectivity to eliminate any cables between the torso of the airman to his head mounted devices using LEDs.

### Objects of the invention

The present invention is defined by the independent claims, to which reference should now be made. Specific embodiments are defined in the dependent claims. The object of the disclosure is to provide an image processing method on FPGA to detect LED centers/positions in the video frame for optical head tracking system.

### Detailed description of the invention

A fast and accurate led center detection for optical head tracking in order to fulfill the objects of the present invention is illustrated in the attached figures, where:

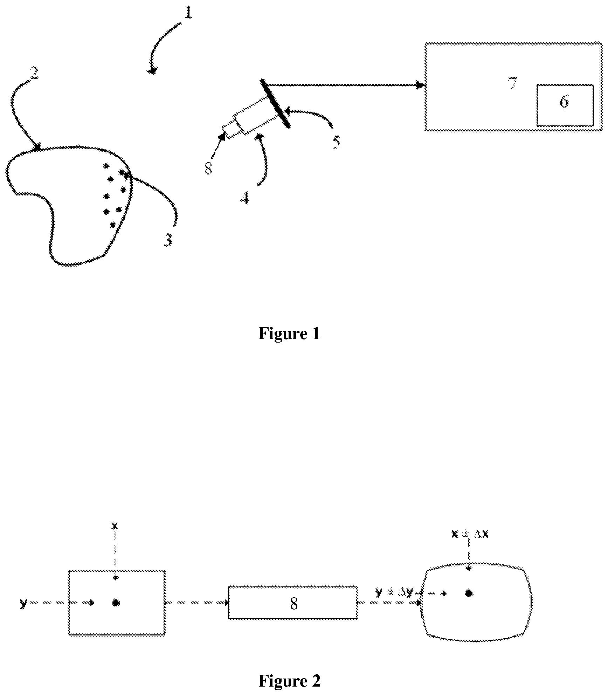

**Figure 1** is the schematic of the optical head tracking system.
**Figure 2** is the distortion on the camera lens.

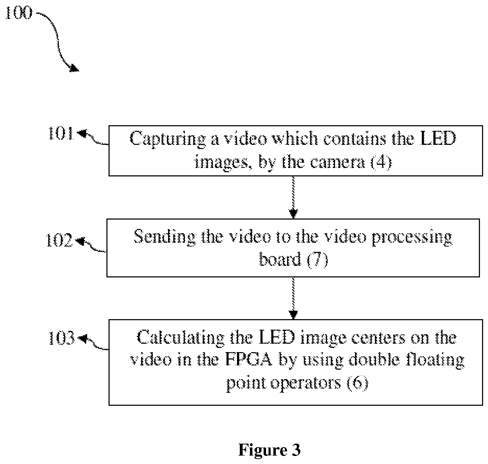

**Figure 3** is the flowchart of the method for optical head tracking.

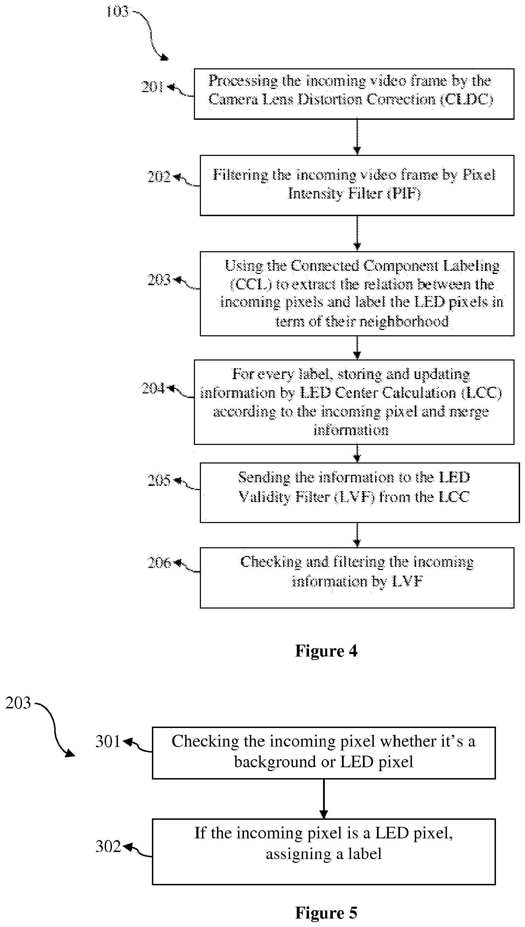

**Figure 4** is the flowchart of the sub-step of calculating the LED image center.
**Figure 5** is the flowchart of the sub-step of using the Connected Component Labeling.

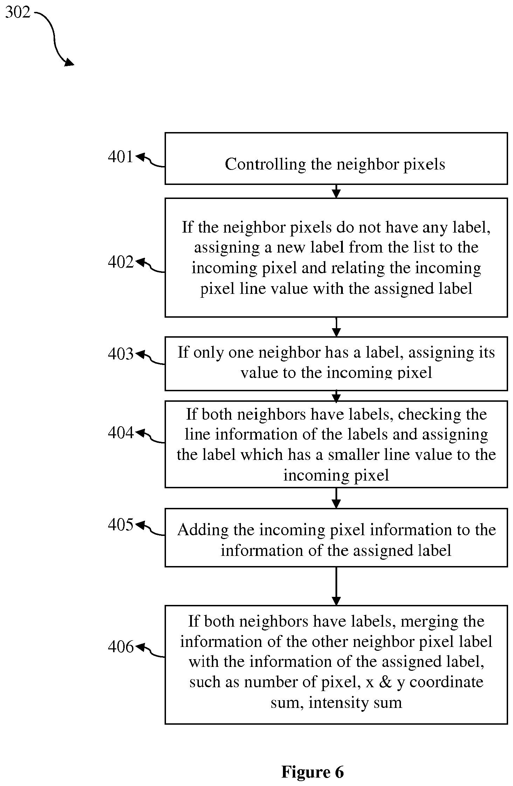

**Figure 6** is the flowchart of the sub-step of assigning a label value to the pixel.

Elements shown in the figures are numbered as follows:
1. The optical head tracking system
2. Helmet
3. LED on helmet
4. Camera
5. Camera holder
6. FPGA
7. Video processing board
8. Camera lens

The system for the optical head tracking system (1) essentially comprises
- at least one helmet (2) which carries a led array as a part of the optical head tracking system (1),
- at least one LED on the helmet (3) which has an infrared characteristic,
- at least one camera (4) which images the LED on the helmet (3),
- at least one camera holder (5) which holds the camera (4),
- at least one FPGA(6) which calculates the LED center coordinates,
- at least one video processing board (7) which contains the FPGA (6) and video capturing components,
- at least one camera lens (8) which only accepts the specific IR from the LED (3).

A method for LED center detection (100) comprises the steps of;
- capturing a video which contains the LED images, by the camera (4) (101),
- sending the video to the video processing board (7) (102),
- calculating the LED image centers on the video in the FPGA by using double floating point operators (6) (103),

In the method for LED center detection (100), the step "calculating the LED image centers on the video in the FPGA (6) (103)" comprises the sub-steps of;
- processing incoming video frame by the Camera Lens Distortion Correction (CLDC) (201),
- filtering the incoming video frame by Pixel Intensity Filter (PIF) (202),
- using Connected Component Labeling (CCL) to extract the relation between the incoming pixels and label the LED pixels in term of their neighborhood (203),
- for every label, storing and updating information by LED Center Calculation (LCC) according to the incoming pixel and merge information (204),
- sending the information to the LED Validity Filter (LVF) from the LCC (205),
- checking and filtering the incoming information by LVF (206).

In the preferred embodiment of the invention, the step "using the Connected Component Labeling (CCL) to extract the relation between the incoming pixels and label the LED pixels on the video frame (203)" comprises the sub-steps of
- checking the incoming pixel whether it's a background or LED pixel (301),
- if the incoming pixel is a LED pixel, assigning a label(302).

In the preferred embodiment of the invention, the step "if the incoming pixel is a LED pixel, assigning a label (302)" comprises the sub-steps of
- controlling the neighbor pixels (upper and left) (401),
- if the neighbor pixels do not have any label (they are background), assigning a new label from the list to the incoming pixel and relating the incoming pixel line value with the assigned label (402),
- if only one neighbor has a label, assigning its value to the incoming pixel (403),
- if both neighbors have labels, checking line information of the labels and assigning the label which has a smaller line value to the incoming pixel (404),
- adding the incoming pixel information to information of the assigned label (405),
- if both neighbors have labels, merging the information of the other neighbor pixel label with the information of the assigned label, such as number of pixel, x & y coordinate sum, intensity sum (406).

The optical head tracking system (1) consists of a helmet (2), LED on the helmet (3), camera (4) which images the LED on helmet (3), and the camera holder (5) which holds the camera (4), FPGA (6) which calculates the LED center coordinates, and video processing board (7) which contains the FPGA (6) and video capturing components, and camera lens (8) which only accepts the specific IR from the LED (3).

The video that contains the LED images is captured by the camera (4) and send to the video processing board (7). Due to the IR characteristics of the LED and the camera filters; the camera video frame consists of white pixels (LED) on black background. The LED image on the video frame looks like a circle but it may also have different shapes. The shape of the LED changes according to the head position relative to the camera. If the head is turned to right or left, the shape looks like an ellipse instead of a circle. If the head comes close the camera LED image becomes large.

The LED image center on the video frame is calculated in the FPGA (6) which is located on the video processing board (7) (104). Firstly, the incoming video frame is processed by the camera lens distortion correction (CLDC) (201) to remove undesirable lens distortions from the video frame. The camera lens (8) may change the original LED position to a faulty position. The CLDC corrects the lens distortion and as a result the LED position.

After CLDC, the pixel intensity filter (PIF) (202) is used. There are not only LED pixels on the incoming video frame. There may also be some noisy pixels. These noisy pixels should be filtered not to create a faulty result. The PIF block cleans up all the noisy pixels on the video frame by using adjustable pixel thresholds.

In the preferred embodiment of the invention, LCC stores following information for every label and update them according to the incoming label & merge information from CCL block (204); the number of pixels that have the related label value, x coordinate sum of the pixels that have the related label value, y coordinate sum of the pixels that have the related label value and intensity sum of the pixels that have the related label value. When a label value does not come to the LCC during a line period, this label is accepted as finished (whole LED image is completed) and its information are sent to the LED validity filter (LVF). Also, this label value is sent back to the CCL for reuse. This reuse decreases the source requirements of the algorithm.

LVF checks the incoming information from LCC (206). If the number of pixels for the related label value is not in a defined range, the incoming information is discarded. Because, the small clutters may have enough intensity values and they may pass the PIF or there can be a big shine to the camera and this may cause a big LED shape clutter.

In the preferred embodiment of the invention, after filtering operation, LVF calculates the LED center positions by using double floating point operators. It divides the x & y coordinate sum to the total number of pixels and this gives the floating point center value (105).

## Claims

1. An optical head tracking system (1) comprising:
at least one helmet (2) which carries a light emitting diode, LED, array as a part of the optical head tracking system (1);
a plurality of LEDs (3) on the helmet (2) which have an infrared, IR, characteristic;
at least one camera (4) which is adapted to capture a video of the LEDs (3) on the helmet (2);
at least one camera holder (5) which is adapted to hold the camera (4);
at least one field programmable gate array, FPGA, (6) which is adapted to calculate LED center coordinates by using double floating point operators;
at least one video processing board (7) which contains the FPGA (6) and video capturing components; and
at least one camera lens (8) adapted to accept only the specific IR from the LEDs (3),
wherein the FPGA (6) is adapted to:
process an incoming video frame by Camera Lens Distortion Correction, CLDC;
filter the incoming video frame using a Pixel Intensity Filter, PIF, to clean up all the noisy pixels on the video frame by using adjustable pixel thresholds;
use Connected Component Labeling, CCL, to extract a relation between the incoming pixels and label LED pixels in terms of their neighborhood;
for every label, store and update information by LED Center Calculation, LCC, according to incoming label information; and
check and filter the incoming information using an LED Validity Filter, LVF, by checking whether the number of pixels for a related label value is in a defined range or not and discarding the incoming information if the number of pixels for the related label value is not in the defined range.

2. The optical head tracking system (1) according to claim 1 wherein the FPGA (6) is adapted to send back finished label values to Connected Component Labeling, CCL, to decrease the source requirements of the algorithm.

3. A method for LED center detection (100) for an optical head tracking system (1), the method comprising the steps of:
capturing a video which contains light emitting diode, LED, images, by a camera (101);
sending the video to a video processing board (102); and
calculating LED image centers on the video in a field programmable gate array, FPGA, (6) by using double floating point operators (103),
wherein the step of calculating the LED image centers on the video in the FPGA (6) further comprises the steps of:
processing an incoming video frame by Camera Lens Distortion Correction, CLDC, (201);
filtering the incoming video frame by a Pixel Intensity Filter, PIF, to clean up all the noisy pixels on the video frame by using adjustable pixel thresholds in the FPGA (202);
using Connected Component Labeling, CCL, to extract a relation between the incoming pixels and label LED pixels in term of their neighborhood (203);
for every label, storing and updating information by LED Center Calculation, LCC, according to incoming label information (204);
sending the information to an LED Validity Filter, LVF, from the LCC (205); and
checking and filtering the incoming information by the LVF by checking whether the number of pixels for a related label value is in a defined range or not and discarding the incoming information if the number of pixels for the related label value is not in the defined range (206).

4. The method for LED center detection (100) according to claim 3, wherein the step of using the CCL to extract the relation between the incoming pixels and label the LED pixels on the video frame (203) further comprises the steps of:
checking whether the incoming pixel is a background or LED pixel (301); and
if the incoming pixel is an LED pixel, assigning a label (302).

## Patentansprüche

1. Optisches Kopfverfolgungssystem (1), umfassend:
mindestens einen Helm (2), der eine Leuchtdioden-Anordnung, LED-Anordnung, als Teil des optischen Kopfverfolgungssystems (1) trägt;
eine Vielzahl von LEDs (3) an dem Helm (2), die eine Infrarot-Charakteristik, IR-Charakteristik, aufweisen;
mindestens eine Kamera (4), die angepasst ist, um ein Video der LEDs (3) an dem Helm (2) zu erfassen;
mindestens einen Kamerahalter (5), der angepasst ist, um die Kamera (4) zu halten;
mindestens ein feldprogrammierbares Gate-Array, FPGA, (6), das angepasst ist, um LED-Mittenkoordinaten durch Verwenden von doppelten Gleitkomma-Operatoren zu berechnen;
mindestens eine Videoverarbeitungsplatine (7), die das FPGA (6) und Videoerfassungskomponenten enthält; und
mindestens eine Kameralinse (8), die angepasst ist, um nur das spezifische IR der LEDs (3) anzunehmen,
wobei das FPGA (6) zu Folgendem angepasst ist:
Verarbeiten eines eingehenden Videobild durch Kameraobjektiv-Verzeichnungskorrektur (Camera Lens Distortion Correction, CLDC);
Filtern des eingehenden Videobilds unter Verwendung eines Pixel-Intensitätsfilters, PIF, um alle verrauschten Pixel auf dem Videobild durch Verwenden von einstellbaren Pixelschwellenwerten zu bereinigen;
Verwenden von Connected Component Labeling, CCL, um ein Verhältniszwischen den eingehenden Pixeln zu extrahieren, und Markieren von LED-Pixeln hinsichtlich ihrer Nachbarschaft;
für jede Markierung, Speichern und Aktualisieren von Informationen LED-Mittenberechnung, LCC, gemäß den eingehenden Markierungsinformationen; und
Prüfen und Filtern der eingehenden Informationen unter Verwendung eines LED-Gültigkeitsfilters (LED Validity Filter, LVF), indem geprüft wird, ob die Anzahl von Pixeln für einen zugehörigen Markierungswert in einem definierten Bereich ist, und Verwerfen der eingehenden Informationen, wenn die Anzahl von Pixeln für den zugehörigen Markierungswert nicht in dem definierten Bereich ist.

2. Optisches Kopfverfolgungssystem (1) nach Anspruch 1, wobei das FPGA (6) angepasst ist, um abgeschlossene Markierungswerte an das Connected Component Labeling, CCL, zurückzuschicken, um die Quellenanforderungen des Algorithmus zu verringern.

3. Verfahren zur LED-Mittendetektion (100) für ein optisches Kopfverfolgungssystem (1), das Verfahren umfassend die folgenden Schritte:
Erfassen eines Videos, das Leuchtdioden-Bilder, LED-Bilder enthält, durch eine Kamera (101);
Senden des Videos an eine Videoverarbeitungsplatine (102); und Berechnen von LED-Bildmittelpunkten auf dem Video in einem feldprogrammierbaren Gate Array, FPGA, (6) durch Verwenden von doppelten Gleitkomma-Operatoren (103),
wobei der Schritt eines Berechnens der LED-Bildmitten auf dem Video in dem FPGA (6) ferner die folgenden Schritte umfasst:
Verarbeiten eines eingehenden Videobild durch Kameraobjektiv-Verzeichnungskorrektur, CLDC, (201);
Filtern des eingehenden Videobilds durch einen Pixel-Intensitätsfilter, **PIF,** um alle verrauschten Pixel auf dem Videobild durch Verwenden von einstellbaren Pixelschwellenwerten in dem FPGA zu bereinigen (202);
Verwenden von Connected Component Labeling, CCL, um ein Verhältniszwischen den eingehenden Pixeln zu extrahieren, und Markieren von LED-Pixeln hinsichtlich ihrer Nachbarschaft (203);
für jede Markierung, Speichern und Aktualisieren von Informationen LED-Mittenberechnung, LCC, gemäß den eingehenden Markierungsinformationen (204); und
Senden der Informationen an einen LED-Gültigkeitsfilter, LVF, von der LCC (205); und
Prüfen und Filtern der eingehenden Informationen durch den LVF, indem geprüft wird, ob die Anzahl von Pixeln für einen zugehörigen Markierungswert in einem definierten Bereich ist, und Verwerfen der eingehenden Informationen, wenn die Anzahl von Pixeln für den zugehörigen Markierungswert nicht in dem definierten Bereich ist (206).

4. Verfahren zur LED-Mittendetektion (100) nach Anspruch 3, wobei der Schritt eines Verwendens des CCL zum Extrahieren des Verhältnisses zwischen den eingehenden Pixeln und Markierens der LED-Pixel auf dem Videoframe (203) ferner die folgenden Schritte umfasst:
Prüfen, ob das eingehende Pixel ein Hintergrund- oder LED-Pixel ist (301); und
wenn das eingehende Pixel ein LED-Pixel ist, Zuweisen einer Markierung (302).

## Revendications

1. Système de suivi de tête optique (1) comprenant :
au moins un casque (2) qui porte un réseau de diodes électroluminescentes (DEL) faisant partie du système de suivi de tête optique (1) ;
une pluralité de DEL (3) sur le casque (2) qui possèdent une caractéristique infrarouge (IR) ;
au moins une caméra (4) qui est adaptée pour capturer une vidéo des DEL (3) sur le casque (2) ;
au moins un support de caméra (5) qui est adapté pour supporter la caméra (4) ;
au moins un réseau de portes programmables in situ (FPGA) (6) qui est adapté pour calculer les coordonnées des centres de DEL à l'aide des opérateurs à virgule flottante à double précision ;
au moins une carte de traitement vidéo (7) qui contient le FPGA (6) et les composants de capture vidéo ; et
au moins une lentille de caméra (8) adaptée pour n'accepter que l'IR spécifique des DEL (3),
ledit FPGA (6) étant adapté pour :
traiter une trame vidéo entrante par correction de la distorsion de lentille de caméra (CLDC) ;
filtrer la trame vidéo entrante à l'aide d'un filtre d'intensité de pixel (PIF) pour nettoyer tous les pixels bruyants sur la trame vidéo à l'aide des seuils de pixels réglables ;
utiliser l'étiquetage de composants connectés (CCL) pour extraire une relation entre les pixels entrants et les pixels de DEL d'étiquette en fonction de leur voisinage ;
pour chaque étiquette, stocker et mettre à jour des informations par le calcul de centre de DEL (LCC) selon les informations d'étiquette entrantes ; et
vérifier et filtrer les informations entrantes à l'aide d'un filtre de validité de DEL (LVF) en vérifiant si le nombre de pixels pour une valeur d'étiquette associée est dans une plage définie ou non et en rejetant les informations entrantes si le nombre de pixels pour la valeur d'étiquette associée n'est pas dans la plage définie.

2. Système de suivi de tête optique (1) selon la revendication 1, ledit FPGA (6) étant adapté pour renvoyer des valeurs d'étiquettes finies à l'étiquetage de composant connecté (CCL) pour diminuer les exigences de source de l'algorithme.

3. Procédé permettant la détection de centre de DEL (100) pour un système de suivi de tête optique (1), le procédé comprenant les étapes de :
capture d'une vidéo qui contient des images de diode électroluminescente (DEL) par une caméra (101) ;
envoi de la vidéo à une carte de traitement vidéo (102) ; et
calcul des centres d'image de DEL sur la vidéo dans un réseau de portes programmables in situ (FPGA) (6) à l'aide des opérateurs à virgule flottante à double précision (103),
ladite étape de calcul des centres d'image DEL sur la vidéo dans le FPGA (6) comprenant en outre les étapes de :
traitement d'une trame vidéo entrante par la correction de distorsion de lentille de caméra (CLDC) (201) ;
filtrage de la trame vidéo entrante par un filtre d'intensité de pixel (PIF) pour nettoyer tous les pixels bruyants sur la trame vidéo à l'aide des seuils de pixels réglables dans le FPGA (202) ;
utilisation de l'étiquetage de composants connectés (CCL), pour extraire une relation entre les pixels entrants et les pixels de DEL d'étiquettes en fonction de leur voisinage (203) ;
pour chaque étiquette, stockage et mise à jour des informations par calcul de centre de DEL (LCC) selon les informations d'étiquette entrantes (204) ;
envoi des informations à un filtre de validité de DEL (LVF) à partir du LCC (205) ; et
vérification et filtrage des informations entrantes par le LVF en vérifiant si le nombre de pixels pour une valeur d'étiquette associée est dans une plage définie ou non et en rejetant les informations entrantes si le nombre de pixels pour la valeur d'étiquette associée n'est pas dans la plage définie (206).

4. Procédé permettant la détection de centre de DEL (100) selon la revendication 3, ladite étape d'utilisation du CCL pour extraire la relation entre les pixels entrants et étiqueter les pixels de DEL sur la trame vidéo (203) comprenant en outre les étapes de :
vérification pour savoir si le pixel entrant est un pixel d'arrière-plan ou de DEL (301) ; et
si le pixel entrant est un pixel de DEL, attribution d'une étiquette (302).
